# EUROPEAN PATENT APPLICATION

(11) **EP 4 610 482 A1**
(43) Date of publication of application: **03.09.2025**
(21) Application number: 23882127.6
(22) Date of filing: 20.03.2023
(51) Int. Cl.: F02K 9/46, F04D 13/14, H02K 7/14

(54) **PROPELLANT SUPPLY SYSTEM**

(30) Priority: 28.10.2022 JP 2022172905
(71) Applicant: Japan Aerospace Exploration Agency, Tokyo 182-8522 (JP)
(72) Inventor: SHIMAGAKI, Mitsuru, Chofu-shi, Tokyo 182-8522 (JP); KIMURA, Toshiya, Chofu-shi, Tokyo 182-8522 (JP); TAKADA, Satoshi, Chofu-shi, Tokyo 182-8522 (JP)
(74) Representative: Richly & Ritschel Patentanwälte PartG mbB
(86) International application number: PCT/JP2023/010879
(87) International publication number: WO 2024/089909

(57) **Abstract**

A propellant supply system (100) for supplying fuel (F) and oxidizer (O) to a propellant supply target (R) includes: an axial gap motor (10) having a rotating shaft, a fuel pump (30) provided at one end of the rotating shaft, and an oxidizer pump (40) provided at the other end of the rotating shaft.

## Description

### TECHNICAL FIELD

The present invention relates to a propellant supply system.

Priority is claimed on Japanese Patent Application No. 2022-172905, filed October 28, 2022, the content of which is incorporated herein by reference.

### BACKGROUND ART

A propellant supply system is used to supply propellant to a rocket engine. For example, Non-Patent Document 1 describes a system in which a radial gap motor having a radial gap and a propellant supply pump are combined as a propellant supply system.

### Citation List

### Non-Patent Document

Non-Patent Document 1: Mitsuru Shimagaki, "Electrification of Rocket Engine Turbopumps", Journal of the Japan Society of Mechanical Engineers, Vol. 123, No. 1224, 2020, pp. 26-29

### SUMMARY OF INVENTION

### Technical Problem

Conventional propellant supply systems have issues regarding miniaturization.

In view of the above-described problems, the object of the present invention is to provide a compact propellant supply system.

### Solution to Problem

<1> A propellant supply system according to Aspect 1 of the present invention is a system for supplying fuel and oxidizer to a propellant supply target, including: an axial gap motor having a rotating shaft; a fuel pump provided at one end of the rotating shaft; and an oxidizer pump provided at the other end of the rotating shaft.

There is a limit when attempting to decrease the size and weight of the radial gap motor of the related art. In order to miniaturize the radial gap motor more than the current size, it is necessary to increase the current of the radial gap motor. However, in this case, since the conductors inside the motor generate a large amount of heat due to Joule loss, the motor may be burnt out. Alternatively, since magnetic saturation occurs due to heat generation, it is not possible to generate a desired electromagnetic force.

In contrast, as in the propellant supply system of this aspect, since the axial gap motor is used, the drive sources of the fuel pump and the oxidizer pump can be made smaller than when the radial gap motor is used. Furthermore, the heat generation amount can be reduced. Thus, the configuration of cooling the motor can be simplified.

Further, the fuel pump is provided at one end of the rotating shaft of the axial gap motor, and the oxidizer pump is provided at the other end. That is, one axial gap motor drives both the fuel pump and the oxidizer pump. Accordingly, the number of components of the propellant supply system can be decreased compared to, for example, a case in which a motor for driving the fuel pump and a motor for driving the oxidizer pump are provided separately.

Therefore, the propellant supply system can be decreased in size and weight.

### Advantageous Effects of Invention

According to the present invention, it is possible to provide a compact propellant supply system.

### BRIEF DESCRIPTION OF DRAWINGS

[FIG. 1] A conceptual diagram of a spacecraft including a propellant supply system according to a first embodiment.
[FIG. 2] A conceptual diagram of an axial gap motor, a fuel pump, and an oxidizer pump included in the propellant supply system shown in FIG. 1.
[FIG. 3] A conceptual diagram of a propellant supply system according to a second embodiment.
[FIG. 4] A conceptual diagram of a propellant supply system according to a third embodiment.
[FIG. 5] A conceptual diagram of a propellant supply system according to a fourth embodiment.
[FIG. 6] A conceptual diagram of a propellant supply system according to a fifth embodiment.

### DESCRIPTION OF EMBODIMENTS

### (First embodiment)

Hereinafter, a propellant supply system 100 according to a first embodiment of the present invention will be described with reference to the drawings. The propellant supply system 100 supplies fuel F and oxidizer O to a propellant supply target R. The propellant supply target R is, for example, a liquid propellant rocket engine. The fuel F supplied to the propellant supply target R is, for example, liquid hydrogen, liquid methane, kerosene based oil. The oxidizer O supplied to the propellant supply target R is, for example, liquid oxygen. The propellant supply system 100 and the propellant supply target R constitute a spacecraft.

When the propellant supply target R is the liquid propellant rocket engine, for example, the thrust of the rocket can be controlled by appropriately adjusting the amount of the fuel F and the oxidizer O required by the propellant supply system 100.

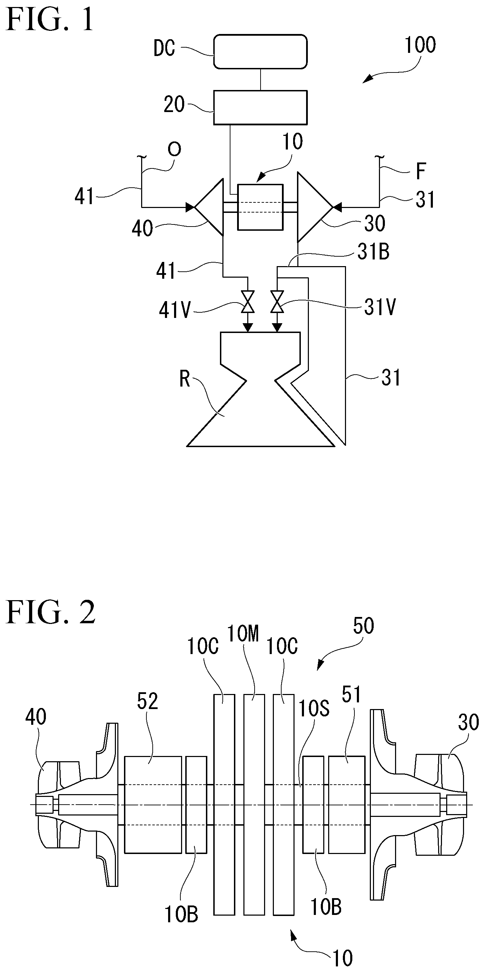

The propellant supply system 100 includes, as shown in FIGS. 1 and 2, an axial gap motor 10, an inverter 20, a fuel pump 30, an oxidizer pump 40, and a shaft seal 50.

The axial gap motor 10 is a drive source for the fuel pump 30 and the oxidizer pump 40. As shown in FIG. 2, the axial gap motor 10 includes a rotating shaft 10S. The rotating shaft 10S is a columnar member. A disk-shaped rotor magnet 10M is provided at the intermediate portion of the rotating shaft 10S. The rotor magnet 10M is orthogonal to the rotating shaft 10S. The rotation center of the rotor magnet 10M overlaps with the center axis of the rotating shaft 10S. For example, the rotor magnet 10M may be integrally formed with the rotating shaft 10S. For example, the rotor magnet 10M may be formed separately from the rotating shaft 10S and then attached to the rotating shaft 10S. The rotor magnet 10M is disposed inside a casing (not shown) of the axial gap motor 10. Both ends of the rotating shaft 10S protrude toward the outside of the casing via a bearing 10B provided in the casing. Furthermore, a stator copper wire 10C which forms a magnetic field that rotates the rotor magnet 10M is provided inside the casing.

A known configuration is preferably used in the axial gap motor 10. In this embodiment, the performance of the axial gap motor 10 is as below. That is, for example, the output of the axial gap motor 10 is, for example, 100 kW.

The performance of the axial gap motor 10 is merely an example. The axial gap motor 10 may have a performance different from the above-described performance as long as the motor has a performance capable of handling at least the output of the fuel pump 30 and the output of the oxidizer pump 40.

The inverter 20 is connected to the axial gap motor 10. The inverter 20 receives electric power from a DC power supply system DC and controls the voltage applied to the stator copper wire 10C of the axial gap motor 10. A known configuration is preferably used for the inverter 20. In the propellant supply system 100 according to this embodiment, only one inverter 20 is provided.

The specifications of the inverter 20 may be adopted, for example, known specifications suitable for use in spacecraft with an output of 100 to 200 kW.

The fuel pump 30 is a pump that supplies the fuel F to the propellant supply target R. The fuel F is supplied from a fuel tank (not shown) to the fuel pump 30. The fuel pump 30 is provided at one end of the rotating shaft 10S. Accordingly, the fuel pump 30 is driven by the axial gap motor 10 (the rotation of the rotating shaft 10S). As shown in FIG. 1, the fuel pump 30 and the propellant supply target R are connected by a fuel path 31.

The fuel path 31 connects the fuel pump 30 and the propellant supply target R. The fuel F discharged from the fuel pump 30 is transferred to the propellant supply target R via the fuel path 31.

In this embodiment, the length of the fuel path 31 is longer than the length of an oxidizer path 41. An intermediate portion of the fuel path 31, that is, a portion of the fuel path 31 excluding the connection portion with the fuel pump 30 and the connection portion with the propellant supply target R is disposed along the propellant supply target R as shown in FIG. 1. Specifically, a portion of the fuel path 31 excluding the connection portion with the fuel pump 30 and the connection portion with the propellant supply target R is disposed at a close position in which the propellant supply target R can be cooled by the fuel F passing through the fuel path 31.

The fuel path 31 has a bypass flow path 31B that bypasses the fuel path 31. The bypass flow path 31B is used, for example, when the propellant supply target R does not need to be cooled by the fuel F, that is, for example, in case of immediately after the propellant supply target R is started up or the like (details will be described later). The bypass flow path 31B connects a connection portion with the fuel pump 30 and a connection portion with the propellant supply target R. The bypass flow path 31B is shorter than the intermediate portion of the fuel path 31. The fuel path 31 may be provided with a switching valve that switches between using and not using the bypass flow path 31B.

The fuel path 31 is provided with a fuel valve 31V which adjusts the flow rate of the fuel F. The fuel valve 31V is provided, for example, in the vicinity of the connection portion between the fuel path 31 and the propellant supply target R. The fuel valve 31V is opened and closed by, for example, electronic control. The electronic control may be performed by a control device (not shown). This control device may control other electronic devices including the inverter 20.

The oxidizer pump 40 is a pump that supplies the oxidizer O to the propellant supply target R. The oxidizer O is supplied from an oxidizer tank (not shown) to the oxidizer pump 40. The oxidizer pump 40 is provided at the other end of the rotating shaft 10S. Accordingly, the oxidizer pump 40 is driven by the axial gap motor 10 (the rotation of the rotating shaft 10S). As shown in FIG. 1, the oxidizer pump 40 and the propellant supply target R are connected by the oxidizer path 41.

The oxidizer path 41 connects the oxidizer pump 40 and the propellant supply target R. The oxidizer O discharged from the oxidizer pump 40 is transferred to the propellant supply target R via the oxidizer path 41.

The oxidizer path 41 is provided with an oxidizer valve 41V which adjusts the flow rate of the oxidizer O. The oxidizer valve 41V is provided, for example, in the vicinity of the connection portion between the oxidizer path 41 and the propellant supply target R. The oxidizer valve 41V is opened and closed by, for example, electronic control. The electronic control may be performed by a control device (not shown). This control device may control other electronic devices including the inverter 20.

The specifications of the fuel pump 30 and the oxidizer pump 40 are substantially determined from the flow rate and pressure required for supplying the fuel F and the oxidizer O set based on the specifications of the propellant supply target R. In this embodiment, it is preferable that the output of the fuel pump 30 be appropriately determined larger than, for example, the output of the oxidizer pump 40.

It is preferable that the output of the fuel pump 30 and the output of the oxidizer pump 40 be determined by, for example, the ratio of the supply amounts of the oxidizer O and the fuel F required for the propellant supply target R.

The shaft seal 50 is provided in the rotating shaft 10S. For example, the shaft seal 50 suppresses the oxidizer O from leaking into the axial gap motor 10 along the rear surface of the oxidizer pump 40 from the discharge of the oxidizer pump 40. The shaft seal 50 has a first shaft seal 51 and a second shaft seal 52.

The first shaft seal 51 is provided on one end side of the rotating shaft 10S. Accordingly, the first shaft seal 51 seals between the rotating shaft 10S and the fuel pump 30. As a result, the first shaft seal 51 suppresses the fuel F from leaking into the axial gap motor 10 along the rear surface of the fuel pump 30 from the discharge of the fuel pump 30. In this embodiment, the first shaft seal 51 includes a known mechanical seal.

The second shaft seal 52 is provided on the other end side of the rotating shaft 10S. Accordingly, the second shaft seal 52 seals between the rotating shaft 10S and the oxidizer pump 40. As a result, the second shaft seal 52 suppresses the oxidizer O from leaking into the axial gap motor 10 along the rear surface of the oxidizer pump 40 from the discharge of the oxidizer pump 40. In this embodiment, the second shaft seal 52 has known mechanical and segment seals. Accordingly, the second shaft seal 52 has higher sealing performance than the first shaft seal 51.

Here, for example, when the propellant supply target R is the liquid propellant rocket engine, it is particularly necessary to suppress the oxidizer O from leaking into the axial gap motor 10 along the rear surface of the oxidizer pump 40 from the discharge of the oxidizer pump 40. Therefore, in the propellant supply system 100, it is preferable to suppress the leakage of the oxidizer O toward the oxidizer pump 40 rather than the leakage of the fuel F toward the fuel pump 30. It is preferable that the sealing performance of the second shaft seal 52 be higher than the sealing performance of the first shaft seal 51 to ensure the above-described requirements.

Here, the fact that the sealing performance of the second shaft seal 52 is higher than the sealing performance of the first shaft seal 51 may mean that the number of sealing mechanisms of the second shaft seal 52 is larger than the number of sealing mechanisms of the first shaft seal 51. In this embodiment, for example, the number of sealing mechanisms of the second shaft seal 52 is two including a mechanical seal and a segment seal, whereas the number of sealing mechanisms of the first shaft seal 51 is one, namely a mechanical seal. The present invention is not limited thereto. For example, when the number of sealing mechanisms of the first shaft seal 51 and the second shaft seal 52 is the same and different types of sealing mechanisms are adopted, the sealing performance of the second shaft seal 52 may be higher than that of the first shaft seal 51 by adopting the sealing mechanism with a high sealing performance using the second shaft seal 52.

### (Supply process of propellant supply system 100)

Next, a process of supplying the fuel F and the oxidizer O to the propellant supply target R using the propellant supply system 100 according to this embodiment will be described.

First, when starting to supply the fuel F and the oxidizer O to the propellant supply target R from a state in which the fuel F and the oxidizer O are not supplied to the propellant supply target R, the axial gap motor 10 starts. Accordingly, the fuel pump 30 and the oxidizer pump 40 start operating. Then, the fuel F is discharged from the fuel pump 30, and the oxidizer O is discharged from the oxidizer pump 40. At this time, the fuel F is transported to the propellant supply target R via the bypass flow path 31B. Accordingly, it is possible to suppress the supply of the fuel F to the propellant supply target R from being delayed relative to the supply of the oxidizer O.

After the fuel F and the oxidizer O are sufficiently supplied to the propellant supply target R and the propellant supply target R reaches a rated operation, the bypass flow path 31B is closed. Accordingly, the fuel F is transported to the propellant supply target R via the fuel path 31 disposed along the propellant supply target R without passing through the bypass flow path 31B. Accordingly, the propellant supply target is cooled when the fuel F passes through the fuel path 31.

With the above-described process, the fuel F and the oxidizer O are supplied to the propellant supply target R.

### (Operation and effect of propellant supply system 100)

There is a limit when attempting to decrease the size and weight of the radial gap motor of the related art. In order to miniaturize the radial gap motor more than the current size, it is necessary to increase the current of the radial gap motor. However, in this case, since the conductors inside the motor generate a very large amount of heat due to Joule loss, the motor may be burn out. Alternatively, since magnetic saturation occurs due to heat generation, it is not possible to generate a desired electromagnetic force.

In contrast, as in the propellant supply system 100 according to this embodiment, since the axial gap motor 10 is used, the drive sources for the fuel pump 30 and the oxidizer pump 40 can be made smaller than when the radial gap motor is used. Furthermore, the heat generation amount can be reduced. Thus, the configuration of cooling the motor can be simplified.

Further, the fuel pump 30 is provided at one end of the rotating shaft 10S of the axial gap motor 10, and the oxidizer pump 40 is provided at the other end. That is, one axial gap motor 10 drives both the fuel pump 30 and the oxidizer pump 40. Accordingly, the number of components of the propellant supply system 100 can be decreased compared to, for example, a case in which a motor for driving the fuel pump 30 and a motor for driving the oxidizer pump 40 are provided separately.

Therefore, it is possible to decrease the size and weight of the propellant supply system 100.

Here, when the propellant supply system 100 is provided with a plurality of motors and each of the plurality of motors is provided with one inverter 20, the weight increases and the configuration becomes complicated when including electrical cables and piping (for example, motor cooling, gas supply or the like). Accordingly, there is a possibility that the risk of failure due to human error or the like may increase.

The propellant supply system 100 according to the present invention has only one inverter 20 connected to the axial gap motor 10. Accordingly, the number of components of the propellant supply system 100 can be decreased compared to a case in which the propellant supply system 100 is provided with a plurality of motors and each of the plurality of motors is provided with one inverter 20. Furthermore, for example, the configuration of the control device that controls the motor and the inverter 20 can be simplified.

Therefore, it is possible to further decrease the size and weight of the propellant supply system 100. Furthermore, it is possible to reduce the risk of failure due to human error.

Further, the length of the fuel path 31 which connects the fuel pump 30 and the propellant supply target R is longer than the length of the oxidizer path 41 which connects the oxidizer pump 40 and the propellant supply target R. Accordingly, for example, since the intermediate portion of the fuel path 31 is disposed along the propellant supply target R, the propellant supply target R can be cooled by the fuel F flowing through the fuel path 31. Thus, the number of components of the propellant supply system 100 can be decreased compared to, for example, a case in which a configuration for cooling the propellant supply target R is provided separately. Therefore, it is possible to decrease the size and weight of the propellant supply system 100.

Further, the fuel path 31 is provided with the fuel valve 31V which adjusts the flow rate of the fuel F. The oxidizer path 41 is provided with the oxidizer valve 41V which adjusts the flow rate of the oxidizer O. Accordingly, for example, it is possible to individually adjust the supply amount of the fuel F and the supply amount of the oxidizer O to the propellant supply target R without using a motor.

Here, in the propellant supply system 100, it is preferable that the leakage of oxygen or oxygen-based liquid toward the oxidizer pump 40 side be suppressed more than the leakage of oxygen or oxygen-based liquid toward the fuel pump 30 side.

The sealing performance of the second shaft seal 52 that seals between the rotating shaft 10S and the oxidizer pump 40 is higher than the sealing performance of the first shaft seal 51 that seals between the rotating shaft 10S and the fuel pump 30. Accordingly, it is possible to further suppress oxygen and oxygen-based liquid from leaking toward the oxidizer pump 40 side relative to the fuel pump 30 side.

Here, it may be necessary to make the supply amount of the fuel F to the propellant supply target R larger than the supply amount of the oxidizer O to the propellant supply target R depending on the ratio of the supply amounts of the oxidizer O and the fuel F required for the propellant supply target R.

The output of the fuel pump 30 is larger than the output of the oxidizer pump 40. Accordingly, for example, even when the motor for driving the oxidizer pump 40 and the motor for driving the fuel pump 30 are the same, the supply amount of the fuel F to the propellant supply target R can be made larger than the supply amount of the oxidizer O to the propellant supply target R without performing special control or the like. Therefore, the propellant supply system 100 can be made more efficient.

### (Second embodiment)

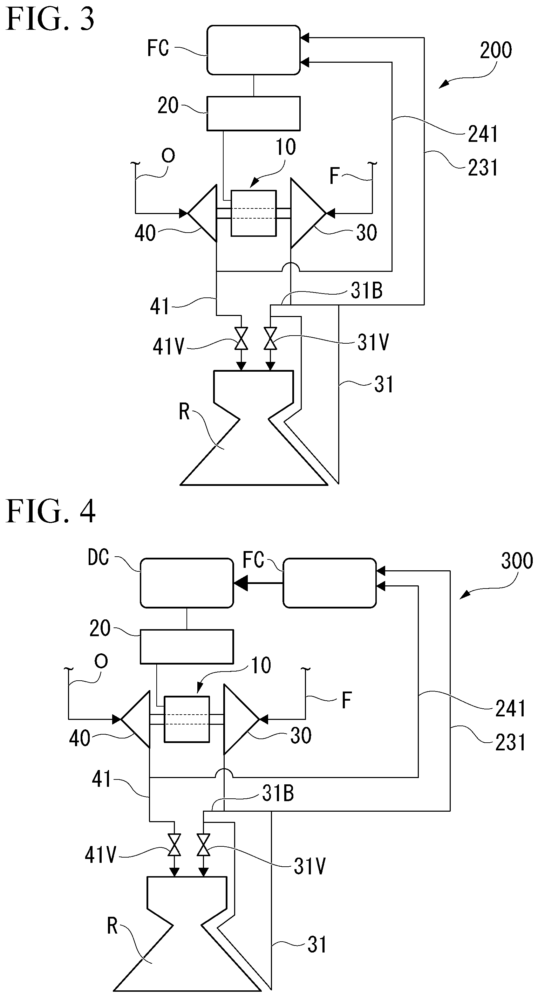

Next, a second propellant supply system 200 according to a second embodiment of the present invention will be described with reference to FIG. 3. Furthermore, in the second embodiment, the same components as those in the first embodiment are indicated by the same reference numerals, their description will be omitted, and only the differences will be described.

As shown in FIG. 3, the second propellant supply system 200 is different from the propellant supply system 100 in that the second propellant supply system receives electricity from the fuel cell system FC instead of the DC power supply system DC.

The fuel cell system FC according to the second embodiment generates electricity when supplied with the fuel F and the oxidizer O. The electricity generated by the fuel cell system FC is supplied to the inverter 20. Accordingly, the inverter 20 is configured to able to drive the axial gap motor 10.

**In** the second embodiment, as shown in FIG. 3, for example, the fuel F and the oxidizer O are supplied from the fuel pump 30 and the oxidizer pump 40 which are driven by the axial gap motor 10 via a second fuel path 231 and a second oxidizer path 241.

With the above-described configuration, the second propellant supply system 200 may not need the DC power supply system DC.

### (Third embodiment)

Next, a third propellant supply system 300 according to a third embodiment of the present invention will be described with reference to FIG. 4. Furthermore, in the third embodiment, the same components as those in the first embodiment and the second embodiment are indicated by the same reference numerals, their description will be omitted, and only the differences will be described.

As shown in FIG. 4, the third propellant supply system 300 is different from the propellant supply system 100 and the second propellant supply system 200 in that a fuel cell system FC is further provided in addition to the DC power supply system DC.

The fuel cell system FC has the same configuration as the second propellant supply system 200 according to the second embodiment. In the third propellant supply system 300, the fuel cell system FC is used to charge the DC power supply system DC connected to the inverter 20. That is, the fuel cell system FC is different from that of the second propellant supply system 200 in that the fuel cell system is not directly connected to the inverter 20.

With the above-described configuration, the third propellant supply system 300 can be used for a longer period of time than the second propellant supply system 200. Accordingly, for example, when the propellant supply target R is a liquid propellant rocket engine, the system can be suitable for long-distance travel.

### (Fourth embodiment)

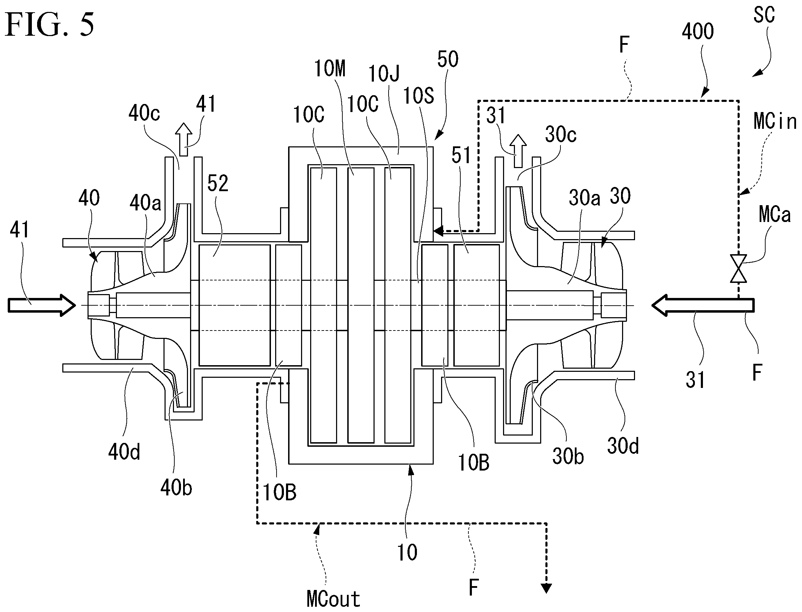

Next, a fourth propellant supply system 400 according to a fourth embodiment of the present invention will be described with reference to FIG. 5. Furthermore, in the fourth embodiment, the same components as those in the first embodiment to the third embodiment are indicated by the same reference numerals, their description will be omitted, and only the differences will be described.

Furthermore, the fourth propellant supply system 400 and the propellant supply target R, for example, constitute a spacecraft SC together with other components (not shown). In other words, the spacecraft SC according to this embodiment includes, for example, the propellant supply target R which is a combustion chamber of the rocket engine and the propellant supply system 100. Furthermore, the spacecraft SC may include any one of the propellant supply system 100, the second propellant supply system 200, and the third propellant supply system 300 described above and a fifth propellant supply system 500 described later instead of the fourth propellant supply system 400.

As in the first embodiment to the third embodiment, the axial gap motor 10 includes the substantially disk-shaped rotor magnet 10M which is fixed to the rotating shaft 10S and holds a substantially annular magnet around the rotating shaft 10S, and the pair of stator copper wires 10C which are arranged facing each other to sandwich the rotor magnet 10M from both sides in the direction of the rotating shaft 10S and have multiple phase windings (not shown) for generating a rotating magnetic field rotating the rotor magnet 10M. The rotor magnet 10M and the pair of stator copper wires 10C are accommodated inside a motor casing (not shown). The pair of bearings 10B are not limited as long as the rotating shaft 10S can be rotatably supported in an environment used as the propellant supply system, but it is preferable that the bearings maintain good rotation performance even when subjected to the influence of the fuel F or the oxidizer O and reach a low temperature (for example, below -100°C). The pair of stator copper wires 10C and the pair of bearings 10B according to the present invention are fixed to the motor casing.

The fourth propellant supply system 400 includes a cooling jacket 10J that functions as a motor-cooling unit.

The cooling jacket 10J is provided to cover the outer peripheries of the stator copper wire 10C and the rotor magnet 10M inside the motor casing (not shown) of the axial gap motor 10. The cooling jacket 10J uses a material that is thermally conductive, has a barrier property against the fuel F, and is corrosion-resistant, and can use, for example, stainless steel. The shape of the cooling jacket 10J is not limited as long as the cooling jacket covers the stator copper wire 10C and the rotor magnet 10M and has a space through which the fuel F as a coolant is movable. However, for example, a tubular flow path bent into multiple parts to cover the stator copper wire 10C and the rotor magnet 10M can be used.

A motor coolant supply path MCin which supplies a coolant to the cooling jacket 10J supplies the fuel F stored in the fuel tank (not shown) to the cooling jacket 10J. In this embodiment, as shown in FIG. 5, the motor coolant supply path MCin branches off from the fuel path 31. That is, the rotor magnet 10M and the stator copper wire 10C of the axial gap motor 10 are cooled by the fuel F.

The flow of the fuel F to the motor coolant supply path MCin is controlled by, for example, the pressure of the fuel tank (not shown). At this time, in order to adjust the flow rate of the fuel F to the motor coolant supply path MCin, for example, a coolant pressure-feed pump or an adjustment valve (not shown) may be provided in the motor coolant supply path MCin.

The fuel F having passed through inside of the cooling jacket 10J via the motor coolant supply path MCin and cooled the axial gap motor 10 is discharged to the outside of the fourth propellant supply system 400 via a coolant discharge path MCout. The fuel F is, for example, sent to a combustion chamber nozzle (not shown) of the propellant supply target R as the rocket engine and burned. The fuel F having passed through inside of the cooling jacket 10J and cooled the axial gap motor 10 may be sent to the fuel path 31 via the coolant discharge path MCout and reused.

As in the first embodiment to the third embodiment, the first shaft seal 51 includes, for example, a known mechanical seal. The first shaft seal 51 is fixed to a fuel pump casing 30d and prevents the leakage of the fuel F inside the fuel pump casing 30d. The second shaft seal 52 has, for example, a known mechanical seal and a known segment seal. Therefore, as shown in FIG. 5, the dimension of the second shaft seal 52 is longer than the dimension of the first shaft seal 51 in the direction along the rotating shaft 10S of the axial gap motor 10. The second shaft seal 52 is fixed to an oxidizer pump casing 40d and prevents the leakage of the oxidizer O inside the oxidizer pump casing 40d.

Furthermore, the bearing 10B on the side of the fuel pump 30 of the axial gap motor 10 (first bearing) is provided closer to the axial gap motor 10 side than the first shaft seal 51, and the bearing 10B on the side of the oxidizer pump 40 of the axial gap motor 10 (second bearing) is provided closer to the axial gap motor 10 side than the second shaft seal 52.

The operation of the fourth propellant supply system 400 will be described. The inverter 20 which receives power from the DC power supply system DC supplies a predetermined current to the stator copper wire 10C of the axial gap motor 10. In the stator copper wire 10C to which a current is supplied, a winding (not shown) generates a magnetic field, and the rotor magnet 10M generates a rotational driving force in response to the action of the generated magnetic field. The rotational driving force rotates an impeller 30a of the fuel pump 30 and an impeller 40a of the oxidizer pump 40 via the rotating shaft 10S. In the fuel pump 30, the fuel F sucked into a pump chamber 30b by the rotation of the impeller 30a is pushed out to the outer peripheral side of the pump chamber 30b by a centrifugal force and discharged from a fuel outlet 30c to the fuel path 31. Even in the oxidizer pump 40, the oxidizer O sucked into the pump chamber 40b by the rotation of the impeller 40a is discharged from an oxidizer outlet 40c to the oxidizer path 41.

When the axial gap motor 10 operates for a certain period of time and a temperature sensor (not shown) detects that the temperature has reached a predetermined temperature or higher, a control device (not shown) fully opens a motor cooling path opening and closing valve MCa. When the motor cooling path opening and closing valve MCa is fully opened, part of the fuel F passes through inside of the cooling jacket 10J via the motor coolant supply path MCin provided on the inlet side of the fuel pump 30 of the fuel path 31 and cools the axial gap motor 10.

### (Operation and effect of fourth propellant supply system 400)

As in the first embodiment to the third embodiment, the impeller 30a of the fuel pump 30 and the impeller 40a of the oxidizer pump 40 are respectively fixed to both ends of the rotating shaft 10S of the axial gap motor 10. Here, the temperature of the fuel F (for example, liquid hydrogen, liquid methane) is -160°C to -250°C, and the temperature of the oxidizer O (for example, liquid oxygen) is very low at -185°C. Therefore, the impeller 30a of the fuel pump 30 and the impeller 40a of the oxidizer pump 40 have a temperature below -100°C. Then, the rotor magnet 10M fixed to the same rotating shaft 10S is cooled by the heat transfer along the rotating shaft 10S having the impeller 30a of the fuel pump 30 and the impeller 40a of the oxidizer pump 40 fixed thereto, and then the stator copper wire 10C disposed facing the rotor magnet 10M is also cooled by the heat transfer. Therefore, an increase in temperature of the rotor magnet 10M can be suppressed, and a decrease in magnetic force can be efficiently suppressed.

Since the cooling jacket 10J is provided to cover the stator copper wire 10C and the rotor magnet 10M and is supplied with the fuel F functioning as a coolant via the motor coolant supply path MCin, an increase in temperature of the stator copper wire 10C and the rotor magnet 10M can be suppressed, and the temperature gradient of the stator copper wire 10C and the rotor magnet 10M cooled by the heat transfer via the rotating shaft 10S can be suppressed, thereby stabilizing the operation of the axial gap motor 10.

### (Fifth embodiment)

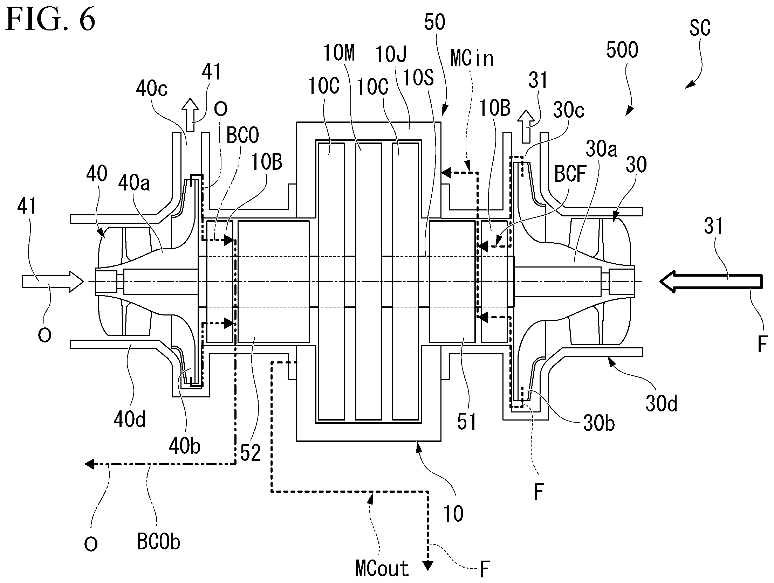

Next, the fifth propellant supply system 500 according to a fifth embodiment of the present invention will be described with reference to FIG. 6. Furthermore, in the fifth embodiment, the same components as those in the first embodiment to the fourth embodiment are indicated by the same reference numerals, their description will be omitted, and only the differences will be described.

In the fifth propellant supply system 500, the bearing 10B serves as a first bearing to support the rotating shaft 10S on the side of the fuel pump 30 relative to the first shaft seal 51, and serves as a second bearing to support the rotating shaft 10S on the side of the oxidizer pump 40 relative to the second shaft seal 52.

The fifth propellant supply system 500 further has the following configuration in addition to each configuration of the fourth propellant supply system 400 in order to cool the pair of bearings 10B by the fuel F and the oxidizer O.

That is, as shown in FIG. 6, in the fifth propellant supply system 500, the fuel F flowing between the surface of the impeller 30a on the side of the axial gap motor 10 in the vicinity of the fuel outlet 30c of the fuel pump 30, that is, the rear surface of the impeller 30a and the fuel pump casing 30d is supplied to the bearing 10B on the side of the fuel pump 30 as a coolant for the bearing 10B on the side of the fuel pump 30. Similarly, the oxidizer O flowing between the rear surface of the impeller 40a in the vicinity of the oxidizer outlet 40c of the oxidizer pump 40 and the oxidizer pump casing 40d is supplied to the bearing 10B on the side of the oxidizer pump 40 as a coolant for the bearing 10B on the side of the oxidizer pump 40. As shown in FIG. 6, a first bearing coolant path BCF (first bearing coolant supply path) that uses the fuel F as a coolant and a second bearing coolant path BCO (second bearing coolant supply path) that uses the oxidizer O as a coolant are respectively formed between the fuel pump 30 and the bearing 10B and between the oxidizer pump 40 and the bearing 10B. Furthermore, as shown in FIG. 6, the fifth propellant supply system 500 is different from those of the first embodiment to the fourth embodiment in that the bearing 10B is provided outside the first shaft seal 51 and the second shaft seal 52. With such a configuration, the fuel F and the oxidizer O having cooled the bearing 10B do not flow into the axial gap motor 10.

The fuel F serving as a coolant for the bearing 10B on the side of the fuel pump 30 or the oxidizer O serving as a coolant for the bearing 10B on the side of the oxidizer pump 40 described above is supplied by, for example, a pump backside leakage flow of the fuel F or the oxidizer O occurring in the fuel pump 30 or the oxidizer pump 40. Generally, a pressure difference occurs between the inlet surface of the pump and the rear surface of the pump to thereby generate axial thrust. In order to prevent the bearings from heating up and breaking due to this axial thrust, a pump backside leakage flow is generated while controlling the flow rate by a valve or the like. That is, in the fifth propellant supply system 500, the fuel F or the oxidizer O supplied from the fuel pump 30 or the oxidizer pump 40 is supplied to the bearing 10B by the pump backside leakage flow occurring in the fuel pump 30 or the oxidizer pump 40. Accordingly, the bearing 10B can be cooled. The flow down of the fuel F to the first bearing coolant path BCF or the flow down of the oxidizer O to the second bearing coolant path BCO is controlled by, for example, the pressures of the fuel tank and the oxidizer tank (not shown) or the pump outlet pressures of the fuel pump 30 and the oxidizer pump 40.

Here, the temperatures of liquid hydrogen and liquid methane, which are examples of the fuel F in the first embodiment described above, are -160°C to -250°C. By using such a liquid as a coolant, for example, a separate cooling system may be eliminated in a spacecraft.

The operation of the fifth propellant supply system 500 will be described. In the fuel pump 30, when the axial gap motor 10 rotates, the fuel F sucked into the pump chamber 30b by the rotation of the impeller 30a fixed to the rotating shaft 10S is pushed out to the outer peripheral side of the pump chamber 30b by a centrifugal force and discharged from the fuel outlet 30c to the fuel path 31. On the other hand, the fuel F moves from between the rear surface of the impeller 30a in the vicinity of the fuel outlet 30c and the fuel pump casing 30d along the fuel pump casing 30d as the pump backside leakage flow, and reaches the bearing 10B (first bearing) on the side of the fuel pump 30. That is, the bearing 10B on the side of the fuel pump 30 is cooled when the fuel F passes through the first bearing coolant path BCF formed between the fuel pump 30 and the bearing 10B on the side of the fuel pump 30. The fuel F having cooled the bearing 10B on the side of the fuel pump 30 is sealed by the first shaft seal 51, for example, moves to the motor coolant supply path MCin, and moves through inside the cooling jacket 10J to cool the axial gap motor 10. The fuel F having cooled the axial gap motor 10 is discharged to the outside of the fifth propellant supply system 500 via the coolant discharge path MCout, for example, sent to the combustion chamber nozzle (not shown) of the propellant supply target R as the rocket engine, and burned.

Even in the oxidizer pump 40, the oxidizer O sucked into the pump chamber 40b is discharged from the oxidizer outlet 40c to the oxidizer path 41 by the rotation of the impeller 40a. On the other hand, the oxidizer O moves from between the rear surface of the impeller 40a in the vicinity of the oxidizer outlet 40c and the oxidizer pump casing 40d along the oxidizer pump casing 40d as the pump backside leakage flow, and reaches the bearing 10B (second bearing) on the side of the oxidizer pump 40. That is, the bearing 10B on the side of the oxidizer pump 40 is cooled when the oxidizer passes through the second bearing coolant path BCO formed between the oxidizer pump 40 and the bearing 10B on the side of the oxidizer pump 40. The oxidizer O having cooled the bearing 10B on the side of the oxidizer pump 40 is sealed by the second shaft seal 52, discharged to the outside of the fifth propellant supply system 500 via a second bearing coolant discharge path BCOb, and, for example, used to generate electricity in the fuel cell system FC in FIG. 3 or discarded to the outside of the spacecraft SC.

Furthermore, in this embodiment, the fuel F having used to cool the bearing 10B on the side of the fuel pump 30 is sent to the motor coolant supply path MCin to cool the axial gap motor 10, but the fuel F leaking out by leakage flow of the fuel pump 30 may be first sent to the motor coolant supply path MCin, for example, and then used to cool the bearing 10B on the side of the fuel pump 30.

### (Operation and effect of fifth propellant supply system 500)

According to the fifth propellant supply system 500 of the fifth embodiment, the fuel F is supplied as a coolant by leakage flow of the fuel pump 30 between a bearing (not shown) of the bearing 10B on the side of the fuel pump 30 as a first bearing and the rotating shaft 10S supported by the bearing in a contact state, that is, the first bearing coolant path BCF. Accordingly, even when the first bearing 10B generates heat due to high-speed or high-load rotation, the first bearing is cooled by the fuel F. Accordingly, the first bearing 10B can be maintained within a temperature range in which the bearing can operate properly, and the axial gap motor 10 can maintain stable rotation.

Since there is a single coolant supply path in which the fuel F having cooled the bearing 10B on the side of the fuel pump 30 moves into the cooling jacket 10J via the motor coolant supply path MCin and cools the axial gap motor 10, it is possible to minimize the consumption of the fuel F which functions as a coolant, reduce the number of components, and contribute to a decrease in size and weight.

Further, the oxidizer O is supplied as a coolant by leakage flow of the oxidizer pump 40 between a bearing (not shown) of the bearing 10B on the side of the oxidizer pump 40 as a second bearing and the rotating shaft 10S supported by the bearing in a contact state, that is, the second bearing coolant path BCO. Accordingly, even when the second bearing 10B generates heat due to high-speed or high-load rotation, the second bearing is cooled by the oxidizer O. Accordingly, the second bearing 10B can be maintained within a temperature range in which the bearing can operate properly, and the axial gap motor 10 can maintain stable rotation.

Furthermore, the technical scope of the present invention is not limited to the above-described embodiments, and various modifications can be made without departing from the spirit of the present invention.

For example, the fuel path 31 may be disposed along the axial gap motor 10 to cool the axial gap motor 10.

The propellant supply target R is not limited to the rocket engine. That is, for example, the propellant supply system 100, the second propellant supply system 200, and the third propellant supply system 300 according to the present invention may be used in a general industrial plant.

Further, in this embodiment, the axial gap motor 10 has been described on the assumption that one rotor magnet 10M is located between two stator copper wires 10C, but a configuration in which one stator copper wire 10C is located between two rotor magnets 10M may also be used.

In addition, the components in the above-described embodiments may be replaced with known components within the scope of the present invention, and the above-described modified examples may be combined as appropriate.

### REFERENCE SIGNS LIST

10 Axial gap motor
10B Bearing
10C Stator copper wire
10J Cooling jacket
10M Rotor magnet
10S Rotating shaft
20 Inverter
30 Fuel pump
31 Fuel path
31B Bypass flow path
31V Fuel valve
40 Oxidizer pump
41 Oxidizer path
41V Oxidizer valve
50 Shaft seal
51 First shaft seal
52 Second shaft seal
100 Propellant supply system
200 Second propellant supply system
231 Second fuel path
241 Second oxidizer path
300 Third propellant supply system
400 Fourth propellant supply system
500 Fifth propellant supply system
40 Oxidizer pump
BCF First bearing coolant path
BCO Second bearing coolant path
BCOb Second bearing coolant discharge path
DC DC power supply system
F Fuel
FC Fuel cell system
MCa Motor cooling path opening and closing valve
MCin Motor coolant supply path
MCout Coolant discharge path
O Oxidizer
R Propellant supply target
SC Spacecraft

## Claims

1. A propellant supply system for supplying fuel and oxidizer to a propellant supply target, comprising:
an axial gap motor having a rotating shaft;
a fuel pump provided at one end of the rotating shaft; and
an oxidizer pump provided at the other end of the rotating shaft.

2. The propellant supply system according to claim 1, further comprising:
a motor-cooling unit for cooling the axial gap motor; and
a coolant supply path supplying the fuel as a coolant to the motor-cooling unit.

3. The propellant supply system according to claim 2, further comprising:
a fuel tank storing fuel; and
a fuel path supplying the fuel stored in the fuel tank to the fuel pump,
wherein the coolant supply path branches off from the fuel path.

4. The propellant supply system according to claim 1, further comprising:
a first shaft seal provided on the one end side of the rotating shaft and sealing fuel leaking from the fuel pump; and
a second shaft seal provided on the other end side of the rotating shaft, sealing oxidizer leaking from the oxidizer pump, and having a higher sealing performance than that of the first shaft seal.

5. The propellant supply system according to claim 1, further comprising:
a first shaft seal provided on the one end side of the rotating shaft and sealing fuel leaking from the fuel pump;
a first bearing supporting the rotating shaft located between the first shaft seal and the fuel pump; and
a first bearing coolant supply path supplying part of the fuel from the fuel pump to the first bearing as a coolant.

6. The propellant supply system according to claim 5, further comprising:
a motor-cooling unit for cooling the axial gap motor; and
a coolant supply path located downstream of the first bearing coolant supply path and supplying fuel having cooled the first bearing to the motor-cooling unit as a coolant.

7. The propellant supply system according to claim 1, further comprising:
a second shaft seal provided on the other side of the rotating shaft and sealing oxidizer leaking from the oxidizer pump;
a second bearing supporting the rotating shaft located between the second shaft seal and the oxidizer pump; and
a second bearing coolant supply path supplying part of the oxidizer from the oxidizer pump to the second bearing as a coolant.
